# EUROPEAN PATENT SPECIFICATION

(11) **EP 3 979 275 B1**
(45) Date of publication and mention of the grant of the patent: **02.09.2026**
(21) Application number: 20199995.0
(22) Date of filing: 05.10.2020
(51) Int. Cl.: H01F 27/33, H01F 27/02, F16F 9/30, F16F 15/08, G10K 11/168, F16B 5/08, F16B 37/06, B32B 3/06, B32B 15/06

(54) **SOUND AND VIBRATION DAMPING SYSTEM FOR TRANSFORMER TANKS AND REACTOR TANKS**
SCHALL- UND SCHWINGUNGSDÄMPFUNGSSYSTEM FÜR TRANSFORMATORBEHÄLTER UND REAKTORBEHÄLTER
SYSTÈME D'AMORTISSEMENT DE SON ET DE VIBRATION POUR CUVES DE TRANSFORMATEURS ET CUVES DE RÉACTEURS

(43) Date of publication of application: 06.04.2022
(73) Proprietor: Siemens Energy Global GmbH & Co. KG, 81739 München (DE)
(72) Inventor: Kelemen, Franjo, 42250 Lepoglava (HR); Pregartner, Helmut, 8160 Krottendorf (AT)

(56) References cited:
- EP-B1- 2 856 477
- WO-A1-2017/038459
- DE-A1- 102012 012 442
- JP-A- 2000 150 262
- JP-A- H09 106 921
- JP-U- S6 397 220
- US-A- 3 102 246
- US-A- 5 579 986
- US-A1- 2009 031 655
- US-B1- 6 177 173

## Description

### FIELD OF THE INVENTION

The present invention relates to a method for producing at least one damped tank wall of a tank, particularly a transformer tank or a reactor tank.

### STATE OF THE ART

Stationary induction devices such as transformers and reactors are commonly used in utility substations for electric power transmission.

Transformers are passive electrical devices that transfer electrical energy between two or more circuits. A varying current in one coil of the transformer produces a varying magnetic flux, which, in turn, induces a varying electromotive force across a second coil wound around the same core. Electrical energy can be transferred between the two coils, without a metallic connection between the two circuits. Therefore, transformers are used for increasing or decreasing alternating voltages in electric power applications.

Reactors are passive two-terminal electrical components that store energy in a magnetic field when electric current flows through them. Typically they consist of an insulated wire wound into a coil around a core.

Both transformers and reactors in operation produce a low-frequency hum that is a source of noise pollution for persons working or living near the substations. The noise is mainly caused by vibration of the core and the coil as well as by vibration of the cooling device. These vibrations are being transmitted to the transformer tank or reactor tank, particularly to the tank wall, so that the tank vibrates and generates noise which is uniformly emitted to the surroundings.

### OBJECTIVE OF THE INVENTION

Hence, it is an objective of the present invention to reduce the vibrations as well as the noise of stationary induction devices in operation.

### SUMMARY OF THE INVENTION

The invention is set out in the appended claims.

In order to achieve the above-mentioned objective, a tank, particularly a transformer tank or a reactor tank, comprises
- an internal space,
- at least one tank wall which surrounds the internal space preferably completely, wherein the at least one tank wall comprises an inner side facing towards the internal space, and
- a damping system,
wherein the damping system comprises
- at least one viscoelastic layer and
- at least one metal sheet, wherein
the damping system is arranged on the inner side of the at least one tank wall, so that the at least one viscoelastic layer is located behind the at least one tank wall and the at least one metal sheet is located behind the at least one viscoelastic layer seen in the direction from the at least one tank wall to the internal space.

For decreasing vibrations on the at least one tank wall as well as for attenuating the transmission of sound the damping system is placed inside the transformer tank on the inner side of the at least one tank wall.

It would be conceivable that the damping system avoids openings, pipes, reinforcement parts and other components that are placed on the inner side of the at least one tank wall.

The damping system comprises at least one viscoelastic layer which is arranged directly on the inner side of the at least one tank wall and at least one metal sheet which is arranged on the at least one viscoelastic layer. This means that, seen in the direction from the at least one wall to the internal space, the at least one viscoelastic layer is located behind the at least one tank wall and the at least one metal sheet is located behind the at least one viscoelastic layer. I.e. the at least one viscoelastic layer is sandwiched between the inner side of the at least one wall and the at least one metal plate.

The at least one viscoelastic layer dissipates system energy due to the fact that it returns to its normal state more slowly than it is deformed.

It would be conceivable that the at least one viscoelastic layer comprises polymers which allow a wide range of different compositions resulting in different material properties and behavior. Thus, the at least one viscoelastic layer can be developed and tailored efficiently for specific applications.

In operation transformer and reactor tanks are filled with oil which has a temperature up to 80°C in average. Since the metal sheet is in direct contact with the oil and also transfers the heat to the at least one viscoelastic layer, both the at least one metal sheet and the at least one viscoelastic layer have to retain appropriate physical and chemical properties in the range of the temperature of the oil.

In a preferred embodiment of the tank, it is provided that the thickness of the at least one viscoelastic layer is between 1 mm to 8 mm, preferably between 3 mm to 5 mm. Due to the very limited space available in the internal space of the tank, a thickness of the at least one viscoelastic layer in this range is the optimum for vibration and noise reduction.

In addition, viscoelastic layers with a thickness between 1 mm to 8 mm, preferably between 3 mm to 5 mm, can be produced cost-effectively.

Furthermore, a certain thickness is necessary for both the viscoelastic layer and the metal sheet, since both must withstand the operating temperatures of the transformer or reactor. Therefore, in a preferred embodiment of the tank, it is provided that the thickness of the at least one metal sheet is at least 5 mm.

Besides, a thickness of at least 5 mm is necessary to ensure that the metal sheet has a corresponding flash-over resistance.

In a preferred embodiment of the tank, it is provided that at least two stud bolts are welded to the inner side of the at least one tank wall, wherein the at least one viscoelastic layer and the at least one metal sheet being attached to the inner side of the at least one tank wall by means of the at least two stud bolts.

Such stud bolts are particularly simple and inexpensive to manufacture. Furthermore, they are resistant and withstand the stresses during operation of the transformer or the reactor.

Welded joints between the at least two stud bolts and the inner side of the at least one tank wall ensure a secure connection and are characterized by particularly easy producibility. In addition, they can also withstand the high temperatures during operation.

In a preferred embodiment of the tank, it is provided that the at least two stud bolts being placed in respective openings in the at least one viscoelastic layer and in the at least one metal sheet. I.e. the at least two stud bolts have a maximum distance which is smaller than a distance between two opposite edges of the metal sheet. This serves the simple arrangement of the at least one viscoelastic layer and the at least one metal sheet on the inner side of the at least one tank wall.

In a preferred embodiment of the tank, it is provided that the at least one metal sheet is welded to the at least two stud bolts, wherein a contact pressure between the at least one viscoelastic layer and the inner side of the at least one tank wall as well as between the at least one metal sheet and the at least one viscoelastic layer is between 0,3 N/mm² to 1 N/mm², preferably between 0,4 N/mm² to 0,6 N/mm².

In order to keep the desired performance - i.e. vibration and noise damping - the contact pressure between the at least one viscoelastic layer and the inner side of the at least one tank wall as well as between the at least one metal sheet and the at least one viscoelastic layer has to be between 0,3 N/mm² to 1 N/mm², preferably between 0,4 N/mm² to 0,6 N/mm².

The welded joints between the at least two stud bolts and the at least one metal sheet ensure that the contact pressure is maintained during operation. Welded joints are characterized by special safety and by particularly easy producibility. In addition, they can also withstand the high temperatures during operation.

In a preferred embodiment of the tank according to the present invention, it is provided that the maximum distance between the at least two stud bolts is 500 mm. This ensures a secure arrangement of the at least one viscoelastic layer and the at least one metal sheet on the inner side of the at least one tank wall.

A maximum distance of 500 mm also ensures an even pressure distribution.

In a preferred embodiment of the tank, it is provided that each of the at least twc stud bolts has a minimum distance of 50 mm from an edge of the metal sheet. This distance ensures that the edges of the at least one metal sheet are not damaged by the welding process. This is of particular importance since damaged edges would no longer guarantee uniform pressure distribution.

In a preferred embodiment of the tank, it is provided that the at least one metal sheet has a planar surface facing towards the internal space.

A planar surface is advantageous, because it avoids a potential sparkover. Furthermore, there is no turbulence of the oil in the internal space.

In addition, a planar surface allows for a balanced magnetic field as well as easier installation of magnetic shields (magnetic shunts).

Accordingly, a transformer is provided, which includes a tank.

In a method for producing at least one damped tank wall of a tank, particularly a transformer tank or a reactor tank, which at least one tank wall surrounds an internal space preferably completely, wherein the at least one tank wall comprises an inner side facing towards the internal space, it is provided that the method includes the following steps:
- welding at least two stud bolts to the inner side of the at least one tank wall,
- placing at least one viscoelastic layer on the at least two stud bolts and on the inner side of the at least one tank wall,
- placing at least one metal sheet on the at least two stud bolts and on the at least one viscoelastic layer,
- applying a pressure on the at least one metal sheet so that a predefined contact pressure between the at least one viscoelastic layer and the inner side of the at least one tank wall as well as between the at least one metal sheet and the at least one viscoelastic layer is obtained,
- welding the at least one metal sheet to the at least two stud bolts, and
- cutting and grinding a surface of the at least one metal sheet facing towards the internal space so that the at least two remaining stud bolts are level with the at least one metal sheet and the at least one metal sheet has a planar surface.

It would be conceivable that the welding processes are carried out by means of electric resistance welding.

In a preferred embodiment of the method according to the present invention, it is provided that the contact pressure between the at least one viscoelastic layer and the inner side of the at least one tank wall as well as between the at least one metal sheet and the at least one viscoelastic layer is between 0,3 N/mm² to 1 N/mm², preferably between 0,4 N/mm² to 0,6 N/mm².

In a preferred embodiment of the method according to the present invention, it is provided that the method comprises the following steps in order to apply the pressure on the at least one metal sheet:
- mounting a nut on each of the at least two stud bolts,
- tightening the nuts with a torque between 70 Nm to 80 Nm, preferably between 74 Nm to 76 Nm, and
- removing the nuts after welding of the at least one metal sheet to the at least two stud bolts.

It would be conceivable that the nuts comprise an opening, through which opening the welding, preferably a spot welding, can be created for fixation of the at least one viscoelastic layer and the at least one metal sheet. This ensures that the contact pressure is maintained.

The invention also comprises a tank comprising at least one damped tank wall obtainable by the method according to the invention.

### BRIEF DESCRIPTION OF THE DRAWINGS

The invention will be explained in closer detail by reference to preferred embodiments. The drawings are, however, only exemplary and are not meant to restrict the scope of the invention as described above.
- Fig. 1: schematically showing an axonometric representation of an embodiment of a tank
- Fig. 2: schematically showing a metal plate
- Fig. 3: schematically showing a sectional view of the tank wall comprising a viscoelastic layer and a metal sheet before welding
- Fig. 4: schematically showing a sectional view of the tank wall comprising the viscoelastic layer, the metal sheet and a nut before welding
- Fig. 5: schematically showing a sectional view of the tank wall comprising the viscoelastic layer and the metal sheet after welding

### WAYS OF CARRYING OUT THE INVENTION

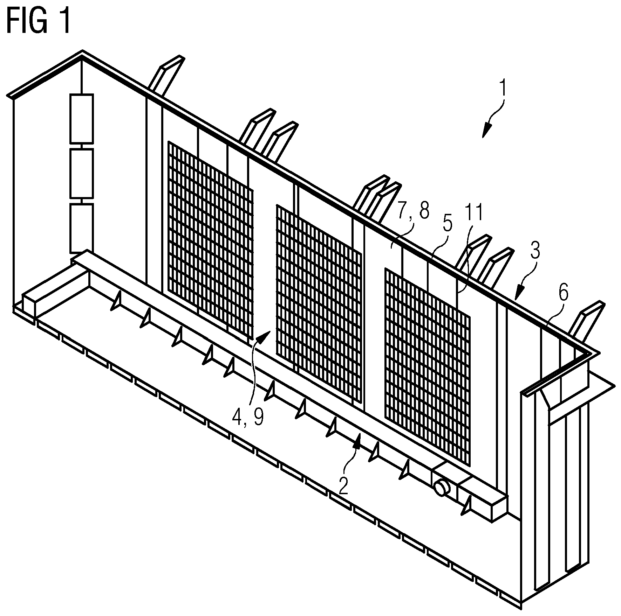

Fig. 1 schematically presents an axonometric representation of an embodiment of a tank 1.

This embodiment shows a transformer tank 1 comprising an internal space 2, a tank wall 3 surrounding the internal space 2, wherein the tank wall 3 comprises an inner side 4 facing towards the internal space 2, and a damping system. The damping system comprises a viscoelastic layer 5, which is located on the inner side 4 of the tank wall 3, and a metal sheet 6, which is located on the viscoelastic layer 5. This means that - seen in the direction from the tank wall 3 to the internal space 2 - the viscoelastic layer 5 is located behind the tank wall 3 and the metal sheet 6 is located behind the viscoelastic layer 5.

In this embodiment a multitude of stud bolts 7 are welded to the inner side 4 of the tank wall 3. Both the viscoelastic layer 5 as well as the metal sheet 6 is attached to the inner side 4 of the tank wall 3, wherein the stud bolts 7 being placed in respective openings 8 in the viscoelastic layer 5 and in the metal sheet 6.

The metal sheet 6 is welded to the stud bolts 7, wherein a contact pressure between the viscoelastic layer 5 and the inner side 4 of the tank wall 3 as well as between the metal sheet 6 and the viscoelastic layer 5 is between 0,3 N/mm² and 1 N/mm².

The metal sheet 6 has a planar surface 9 facing towards the internal space 2, wherein magnetic shunts 11 are attached to the surface 9.

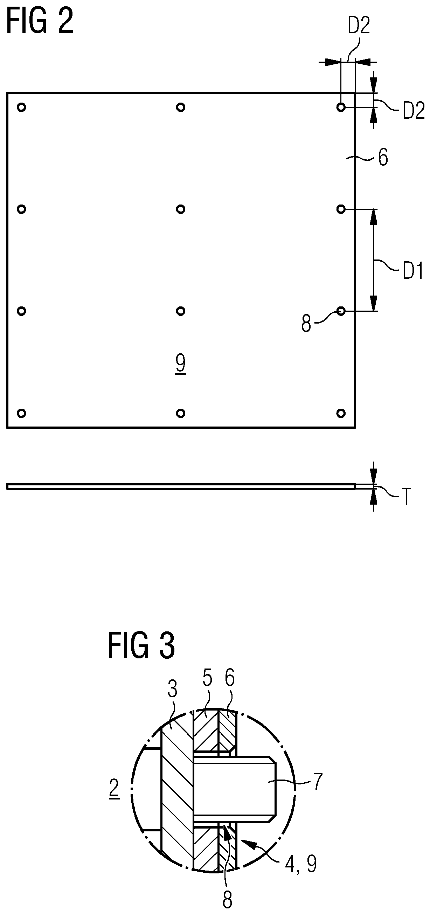

Fig. 2 schematically shows the metal sheet 6 which has a thickness T of at least 5 mm in this embodiment. The metal sheet 6 comprises several openings 8 to position and fix the metal sheet 6 on the stud bolts 7, wherein the openings preferably have a diameter of 20 mm. The maximum distance D1 between two adjacent openings 8 is 500 mm and the minimum distance D2 between an opening 8 and an edge of the metal sheet 6 is 50 mm.

The viscoelastic layer 5 has the same dimensions and openings as the metal sheet 6, but the diameter of the openings 8 is slightly larger, preferably 25 mm.

The tank wall 3 of the transformer is manufactured with a method according to the invention as follows:
At the beginning, the stud bolts 7 are welded to the inner side 4 of the tank wall 3. The viscoelastic layer 5 and the metal sheet 6 are arranged on the stud bolts 7, whereby it would be conceivable that openings, pipes, reinforcement parts and other components that are arranged on the inner side 4 of the tank wall 3 are avoided. Fig. 3 schematically shows a sectional view of the tank wall 3 comprising the viscoelastic layer 5 and the metal sheet 6 before welding.

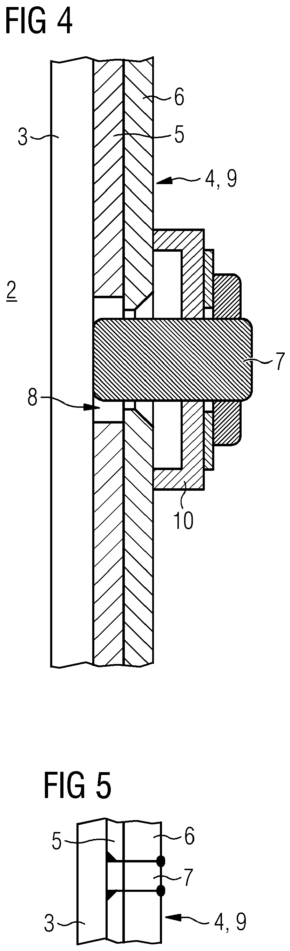

Then, pressure is exerted on the metal sheet 6 so that a defined contact pressure is created between the metal sheet 6 and the viscoelastic layer 5 and between the viscoelastic layer 5 and the inner side 4 of the tank wall 3. In order to create the corresponding pressure, a nut 10 is mounted on each of the stud bolts 7, wherein each nut 10 is tightened with a torque of 75 Nm. Fig. 4 schematically shows a sectional view of the tank wall 3 comprising the viscoelastic layer 5, the metal sheet 6 and a nut 10 before welding.

Then, the metal sheet 6 is welded to the stud bolts 7 while the defined pressure is maintained via the nuts 10. For the welding process, each nut 10 comprises an opening, through which opening a spot welding is created for fixation of the viscoelastic layer 5 and the metal sheet 6.

Finally, the nuts 10 are removed and the stud bolts 7 and the corresponding weld seams are machined - i.e. cut and ground - so that the metal plate 6 has a planar surface 9. Fig. 5 schematically shows a corresponding sectional view of the tank wall 3 comprising the viscoelastic layer 5 and the metal sheet 6 after welding.

The tank wall 3 according to the invention reduces vibrations and noise due to the damping system on the inner side 4 of the tank wall 3.

### REFERENCE SIGNS:

- 1: tank
- 2: internal space
- 3: tank wall
- 4: inner side
- 5: viscoelastic layer
- 6: metal sheet
- 7: stud bolt
- 8: openings
- 9: surface
- 10: nut
- 11: magnetic shunt

- D1: maximum distance
- D2: minimum distance
- T: thickness

## Claims

1. A method for producing at least one damped tank wall (3) of a tank (1), particularly a transformer tank or a reactor tank, which at least one tank wall (3) surrounds an internal space (2) preferably completely, wherein the at least one tank wall (3) comprises an inner side (4) facing towards the internal space (2), wherein the method includes the following steps:
- welding at least two stud bolts (7) to the inner side (4) of the at least one tank wall (3),
- placing at least one viscoelastic layer (5) on the at least two stud bolts (7) and on the inner side (4) of the at least one tank wall (3),
- placing at least one metal sheet (6) on the at least two stud bolts (7) and on the at least one viscoelastic layer (5),
- applying a pressure on the at least one metal sheet (6) so that a predefined contact pressure between the at least one viscoelastic layer (5) and the inner side (4) of the at least one tank wall (3) as well as between the at least one metal sheet (6) and the at least one viscoelastic layer (5) is obtained,
- welding the at least one metal sheet (6) to the at least two stud bolts (7), and
- cutting and grinding a surface (9) of the at least one metal sheet (6) facing towards the internal space (2) so that the at least two remaining stud bolts (7) are level with the at least one metal sheet (6) and the at least one metal sheet (6) has a planar surface (9).

2. Method according to claim 1, **characterized in that** the contact pressure between the at least one viscoelastic layer (5) and the inner side (4) of the at least one tank wall (3) as well as between the at least one metal sheet (6) and the at least one viscoelastic layer (5) is between 0,3 N/mm² to 1 N/mm², preferably between 0,4 N/mm² to 0,6 N/mm².

3. Method according to any of the claims 1 or 2, **characterized in that** the method comprises the following steps in order to apply the pressure on the at least one metal sheet (6):
- mounting a nut (10) on each of the at least two stud bolts (7),
- tightening the nuts (10) with a torque between 70 Nm to 80 Nm, preferably between 74 Nm to 76 Nm, and
- removing the nuts (10) after welding of the at least one metal sheet (6) to the at least two stud bolts (7).

4. Tank (1) comprising at least one damped tank wall (3) obtainable by a method according to claim 1.

## Patentansprüche

1. Verfahren zum Herstellen mindestens einer gedämpften Behälterwand (3) eines Behälters (1), insbesondere eines Transformatorbehälters oder eines Reaktorbehälters, wobei mindestens eine Behälterwand (3) einen Innenraum (2) bevorzugt vollständig umgibt, wobei die mindestens eine Behälterwand (3) eine Innenseite (4) umfasst, die dem Innenraum (2) zugewandt ist, wobei das Verfahren die folgenden Schritte beinhaltet:
- Schweißen von mindestens zwei Stehbolzen (7) an die Innenseite (4) der mindestens einen Behälterwand (3),
- Platzieren von mindestens einer viskoelastischen Schicht (5) auf den mindestens zwei Stehbolzen (7) und auf der Innenseite (4) der mindestens einen Behälterwand (3),
- Platzieren von mindestens einem Metallblech (6) auf die mindestens zwei Stehbolzen (7) und auf die mindestens eine viskoelastische Schicht (5),
- Anwenden eines Drucks auf das mindestens eine Metallblech (6), sodass ein vordefinierter Kontaktdruck zwischen der mindestens einen viskoelastischen Schicht (5) und der Innenseite (4) der mindestens einen Behälterwand (3) sowie zwischen dem mindestens einen Metallblech (6) und der mindestens einen viskoelastischen Schicht (5) erlangt wird,
- Schweißen des mindestens einen Metallblechs (6) an die mindestens zwei Stehbolzen (7) und
- Schneiden und Schleifen einer Oberfläche (9) des mindestens einen Metallblechs (6), die dem Innenraum (2) zugewandt ist, sodass die mindestens zwei verbleibenden Stehbolzen (7) mit dem mindestens einen Metallblech (6) auf einer Höhe sind und das mindestens eine Metallblech (6) eine ebene Oberfläche (9) aufweist.

2. Verfahren nach Anspruch 1, **dadurch gekennzeichnet, dass** der Kontaktdruck zwischen der mindestens einen viskoelastischen Schicht (5) und der Innenseite (4) der mindestens einen Behälterwand (3) sowie zwischen dem mindestens einen Metallblech (6) und der mindestens einen viskoelastischen Schicht (5) zwischen 0,3 N/mm² bis 1 N/mm², bevorzugt zwischen 0,4 N/mm² bis 0,6 N/mm² beträgt.

3. Verfahren nach einem der Ansprüche 1 oder 2, **dadurch gekennzeichnet, dass** das Verfahren die folgenden Schritte umfasst, um den Druck auf das mindestens eine Metallblech (6) anzuwenden:
- Montieren einer Mutter (10) an jedem der mindestens zwei Stehbolzen (7),
- Anziehen der Muttern (10) mit einem Drehmoment zwischen 70 Nm und 80 Nm, bevorzugt zwischen 74 Nm und 76 Nm, und
- Entfernen der Muttern (10) nach dem Schweißen des mindestens einen Metallblechs (6) an die mindestens zwei Stehbolzen (7).

4. Behälter (1), umfassend mindestens eine gedämpfte Behälterwand (3), die durch ein Verfahren nach Anspruch 1 erlangbar ist.

## Revendications

1. Procédé de production d'au moins une paroi de cuve amortie (3) d'une cuve (1), particulièrement une cuve de transformateur ou une cuve de réacteur, laquelle au moins une paroi de cuve (3) entoure un espace interne (2) de préférence complètement, dans lequel l'au moins une paroi de cuve (3) comprend un côté interne (4) tourné vers l'espace interne (2), dans lequel le procédé comprend les étapes suivantes :
- le soudage d'au moins deux goujons filetés (7) sur le côté interne (4) de l'au moins une paroi de cuve (3),
- le placement d'au moins une couche viscoélastique (5) sur les au moins deux goujons filetés (7) et sur le côté interne (4) de l'au moins une paroi de cuve (3),
- le placement d'au moins une tôle métallique (6) sur les au moins deux goujons filetés (7) et sur l'au moins une couche viscoélastique (5),
- l'application d'une pression sur l'au moins une tôle métallique (6) de sorte qu'une pression de contact prédéfinie entre l'au moins une couche viscoélastique (5) et le côté interne (4) de l'au moins une paroi de cuve (3) ainsi qu'entre l'au moins une tôle métallique (6) et l'au moins une couche viscoélastique (5) soit obtenue,
- le soudage de l'au moins une tôle métallique (6) sur les au moins deux goujons filetés (7), et
- la découpe et le meulage d'une surface (9) de l'au moins une tôle métallique (6) tournée vers l'espace interne (2) de sorte que les au moins deux goujons filetés (7) restants soient au ras de l'au moins une tôle métallique (6) et que l'au moins une tôle métallique (6) présente une surface plane (9).

2. Procédé selon la revendication 1, **caractérisé en ce que** la pression de contact entre l'au moins une couche viscoélastique (5) et le côté interne (4) de l'au moins une paroi de cuve (3) ainsi qu'entre l'au moins une tôle métallique (6) et l'au moins une couche viscoélastique (5) est comprise entre 0,3 N/mm² et 1 N/mm², de préférence entre 0,4 N/mm² et 0,6 N/mm².

3. Procédé selon l'une quelconque des revendications 1 ou 2, **caractérisé en ce que** le procédé comprend les étapes suivantes afin d'appliquer la pression sur l'au moins une tôle métallique (6) :
- le montage d'un écrou (10) sur chacun des au moins deux goujons filetés (7),
- le serrage des écrous (10) avec un couple compris entre 70 Nm et 80 Nm, de préférence entre 74 Nm et 76 Nm, et
- le retrait des écrous (10) après le soudage de l'au moins une tôle métallique (6) sur les au moins deux goujons filetés (7).

4. Cuve (1) comprenant au moins une paroi de cuve amortie (3) pouvant être obtenue par un procédé selon la revendication 1.
